(19) Europäisches Patentamt
European Patent Office
Office européen des brevets

(11) **EP 1 974 456 B1**

(12) **FASCICULE DE BREVET EUROPEEN**

(45) Date de publication et mention
de la délivrance du brevet:
**12.09.2012 Bulletin 2012/37**

(21) Numéro de dépôt: **07718093.3**

(22) Date de dépôt: **15.01.2007**

(51) Int Cl.:
***H02P 6/14*** *(2006.01)*

(86) Numéro de dépôt international:
**PCT/FR2007/050649**

(87) Numéro de publication internationale:
**WO 2007/083059 (26.07.2007 Gazette 2007/30)**

(54) **DISPOSITIF DE PILOTAGE D'UNE MACHINE TOURNANTE POLYPHASEE**

VORRICHTUNG ZUR STEUERUNG EINER POLYPHASEN-ROTATIONSMASCHINE

DEVICE FOR CONTROLLING A POLYPHASE ROTATING MACHINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.01.2006 FR 0600534**

(43) Date de publication de la demande:
**01.10.2008 Bulletin 2008/40**

(73) Titulaire: **VALEO EQUIPEMENTS ELECTRIQUES MOTEUR**
**94046 Créteil Cedex (FR)**

(72) Inventeurs:
• **MASFARAUD, Julien**
**F-75010 Paris (FR)**
• **DOFFIN, Hugues**
**F-94000 Creteil (FR)**
• **BOUDJEMAI, Farouk**
**F-91460 Marcoussis (FR)**

(56) Documents cités:
**US-A- 3 999 108      US-A- 4 271 385**
**US-A- 5 838 123      US-A- 6 002 234**

**Description**

Domaine de l'invention

L'invention concerne un circuit de commande d'une machine électrique tournante polyphasée, éventuellement réversible comme dans le cas des alternateurs-démarreurs.

Etat de la technique

Une machine électrique tournante comprend classiquement un rotor et un stator. L'un de ces éléments est parcouru par un courant continu et génère ainsi un champ magnétique constant et d'orientation fixe par rapport à cet élément. L'autre élément comprend une pluralité d'enroulements distincts et espacés angulairement ; chaque enroulement est parcouru par un courant déphasé par rapport à celui des autres enroulements de manière à créer un champ magnétique tournant. La coexistence du champ d'orientation fixe du premier élément et du champ tournant du second élément entraînent la rotation de ces éléments l'un par rapport à l'autre, c'est-à-dire la rotation du rotor par rapport au stator.

Les différents courants sont généralement injectés dans les enroulements de l'élément polyphasé à travers un pont formé par des interrupteurs de puissance (en général des diodes associées à des transistors de puissance).

Ce pont de puissance est en général piloté par un module électronique qui fixe les instants d'ouverture et de fermeture des interrupteurs et commande ainsi la phase des différents courants à travers les enroulements.

Afin de déterminer les instants de commande des interrupteurs, le module électronique utilise couramment des signaux représentatifs de la position du rotor par rapport au stator, tel que par exemple des capteurs de position régulièrement répartis sur la circonférence de la machine tournante, qui envoient chacun des signaux périodiques à la fréquence de rotation du rotor et déphasés l'un par rapport à l'autre.

Dans le cas où la machine électrique tournante est réversible, le pont de puissance joue le rôle d'un pont redresseur lors du fonctionnement en mode alternateur de la machine.

Dans le but de s'approcher d'un couple optimal sur une plage importante de vitesses de rotation, le document WO 2004/100351 propose de traiter les signaux issus des capteurs par pondération et sommation, en pratique au moyen d'un circuit de filtrage analogique, ce qui permet de réaliser des décalages de phase continûment variables sur toute la plage des vitesses de rotation.

Toutefois, selon cette solution, le décalage de phase est déterminé en fonction de la vitesse par les composants du circuit analogique. La relation décalage-vitesse est donc figée et ne peut donc pas notamment être adaptée aux différentes situations qui peuvent être rencontrées (démarrage, assistance dynamique, ...). De plus, le choix de cette relation manque de flexibilité puisqu'elle est déterminée en fonction des éléments de circuit utilisés et donc est peu adaptable à d'autres machines électriques, par exemple de dimensionnements différents. Cette conception implique, en outre, l'utilisation d'un circuit analogique avec des caractéristiques propres pour chaque type de machine que l'on souhaite fabriquer, ce qui complique la fabrication des machines à un niveau industriel

Le document US 4271385 divulgue un autre dispositif de pilotage selon l'état de la technique.

Objet de l'invention

Pour éviter ces problèmes et permettre ainsi notamment une plus grande flexibilité dans le décalage de phase des signaux issus des capteurs, l'invention propose un dispositif de pilotage d'une machine électrique tournante polyphasée, ladite machine comprenant un stator, un rotor, et des capteurs, ledit dispositif étant apte à recevoir :

- au moins un premier signal capteur représentatif d'une position du rotor par rapport au stator et délivré par un premier capteur, et
- un second signal capteur représentatif de ladite position et déphasé par rapport au premier signal et délivré par un second capteur.

Conformément à l'invention, le dispositif de pilotage comporte :

- des moyens pour combiner le premier et le second signal capteur en un signal combiné, lesdits moyens comprenant au moins un élément de commutation piloté apte à prendre au moins deux états, le signal combiné étant fonction d'un état du premier élément et permettant de piloter ladite machine..

On peut ainsi facilement donner au décalage de phase du signal combiné une pluralité de valeurs par le choix des signaux transmis par les premier et second éléments.

Selon des modes de réalisation non limitatifs, le dispositif selon l'invention peut comporter une ou plusieurs des caractéristiques suivantes :

- Le premier élément de commutation comporte un état passant permettant de transmettre un signal et un état ouvert permettant de stopper une transmission de signal.

- Le premier élément de commutation comporte aux moins deux états passants permettant de transmettre sélectivement un signal parmi plusieurs.

- Le dispositif de pilotage est apte à recevoir en entrée un nombre de signaux capteurs égal au nombre de phases de la machine.

- Le dispositif de pilotage est apte à recevoir en entrée un nombre de signaux capteurs différent du nombre de phases de la machine.

- Les moyens de combinaison comprennent en outre des moyens de pondération des signaux capteurs.

- Les moyens de pondération comprennent au moins une résistance.

- Les moyens de combinaison comprennent une pluralité d'éléments de commutation.

- Le Dispositif de pilotage coopère avec un circuit de commande comportant un étage d'entrée apte à recevoir les signaux capteurs.

- Le dispositif de pilotage coopère avec un circuit de commande comportant un microprocesseur apte à piloter au moins un élément de commutation.

- Le microprocesseur est apte à piloter l'élément de commutation en fonction d'une information représentative de la vitesse de rotation de la machine.

L'invention propose également une machine électrique tournante polyphasée, par exemple un alternateur-démarreur, avec un tel dispositif de pilotage.

Brève description des Figures

D'autres caractéristiques et avantages de l'invention apparaîtront à la lumière de la description qui suit, faits en référence aux dessins annexés dans lesquels :

- la figure 1 représente les éléments d'une machine électrique tournante polyphasée et sa commande, la commande comportant un bloc d'avance de phase;
- la figure 2a représente un premier mode de réalisation non limitatif du bloc d'avance de phase de la figure 1 ;
- la figure 2b représente un deuxième mode de réalisation non limitatif du bloc d'avance de phase de la figure 1 ;
- la figure 2c représente un troisième mode de réalisation non limitatif du bloc d'avance de phase de la figure 1 ;
- la figure 2d représente un quatrième mode de réalisation non limitatif du bloc d'avance de phase de la figure 1 ;
- les figures 3 à 8 représentent des modes possibles de réalisation non limitatifs d'un circuit mélangeur d'un bloc d'avance de phase de la figure 2a ou 2b.

Description détaillée de modes de réalisation non limitatifs de l'invention

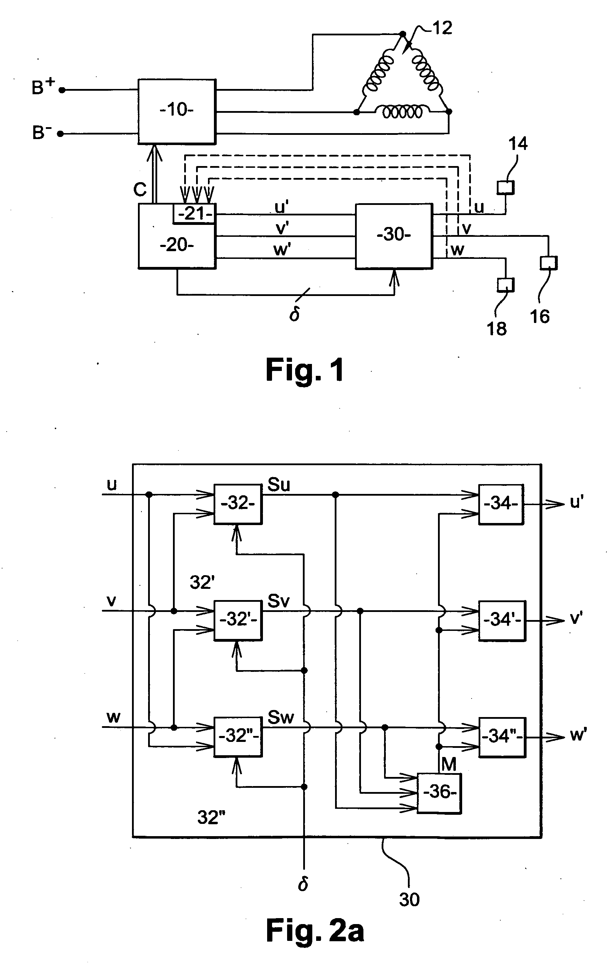

La figure 1 représente les éléments principaux d'une machine électrique tournante polyphasée, par exemple réversible du type alternateur-démarreur ainsi que sa commande.

La figure 1 présente un exemple non limitatif d'une machine électrique tournante triphasée avec trois capteurs de position.

Une telle commande comprend un pont de puissance 10 qui, en mode moteur, alimente les phases d'un stator 12, dans cet exemple non limitatif trois phases, à partir d'une tension générée entre les deux bornes $B^+$, $B^-$ d'une batterie d'alimentation.

Le pont de puissance 10 est formé d'interrupteurs (non représentés) qui sont commandés par des signaux de commande C de sorte que les différents enroulements du stator 12 soient parcourus par des signaux décalés de 120° l'un par rapport à l'autre dans cet exemple.

Dans cet exemple non limitatif, il existe trois capteurs. Les trois capteurs linéaires 14, 16, 18 sont de manière non limitative équirépartis sur 360° électriques et génèrent des signaux capteurs U, V, W. Ces signaux sont traités par un dispositif de pilotage appelé bloc d'avance de phase 30 qui délivre trois signaux numériques U', V', W' correspondant aux signaux capteurs U, V, W avec une avance de phase δ par rapport à ceux-ci.

Les signaux numériques U', V', W' générés par le bloc d'avance de phase 30 sont utilisés par un circuit de commande 20 pour former les signaux de commande C du pont de puissance 10.

Le circuit de commande 20 génère par ailleurs une consigne d'avance de phase δ. Pour ce faire, le circuit de commande comprend par exemple un microcontrôleur (incluant un microprocesseur) qui détermine la vitesse de rotation de la machine sur la base des signaux capteur U, V, W ou sur la base des signaux numériques U', V', W' et qui en déduit le décalage de phase δ à utiliser, éventuellement également fonction d'autres conditions, tel que la phase de fonctionnement de la machine (exemple mode moteur (phase démarrage ou assistance dynamique à haute vitesse), transition mode moteur-mode générateur) ou encore consigne de couple. Dans cet exemple non limitatif, la valeur de décalage δ est donc associée à une vitesse et condition de fonctionnement données et est par exemple mémorisé au sein du microcontrôleur dans une table de correspondance. A cet effet, le circuit de commande comporte un étage d'entrée 21 apte à recevoir les signaux capteurs U, V, W ou les signaux numériques U', V', W.

Lorsque la machine fonctionne en mode alternateur appelé également mode générateur, le pont de puissance 10 joue le rôle d'un pont redresseur qui assure la transmission de l'énergie de la machine (et notamment du stator 12) à la batterie (borne $B^+$, $B^-$).

On décrit à présent en référence à la figure 2a un premier exemple de réalisation non limitatif du bloc d'avance de phase 30.

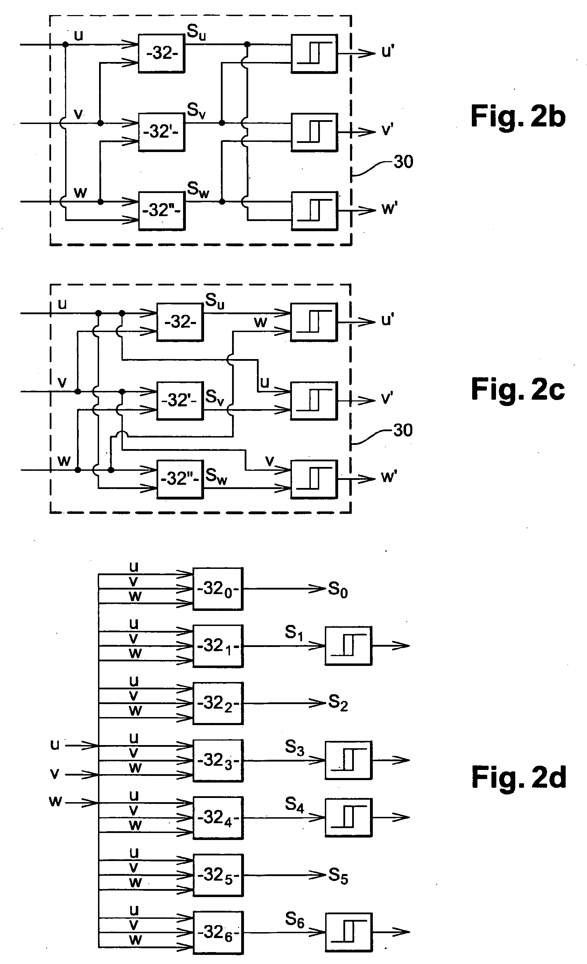

Le bloc d'avance de phase 30 de la figure 2 comprend trois circuits dits "*mélangeurs*" 32, 32', 32" qui reçoivent chacun en entrée un signal issu d'un capteur (le signal U pour le circuit mélangeur 32) et le signal en avance de phase de 120° par rapport à celui-ci (le signal V pour le circuit mélangeur 32).

Chaque circuit mélangeur procède à une combinaison des signaux qu'il reçoit en entrée (signaux U et V pour le circuit mélangeur 32), avec une pondération qui dépend du signal de commande δ généré par le circuit de commande 20 et représentatif de l'avance de phase souhaitée.

Le signal combiné et généré en sortie de chaque circuit mélangeur 32, 32', 32" (signal respectivement désigné $S_U$, $S_V$ et $S_W$) est appliqué à une première entrée d'un comparateur à hystérésis 34, 34', 34". Les signaux combinés $S_u$, $S_V$ et $S_w$ sont également appliqués à un circuit 36 qui forme un signal M représentant la moyenne de ces signaux, laquelle est appliquée à la seconde entrée de chacun des comparateurs à hystérésis 34, 34', 34".

On obtient ainsi en sortie de chacun des comparateurs à hystérésis 34, 34', 34" les signaux U', V, W' destinés au circuit de commande 20 et qui correspondent aux signaux U, V, W avec l'avance de phase souhaitée. L'utilisation des comparateurs à hystérésis et de la moyenne M permet de s'affranchir du décalage en tension appelé tension d'offset des signaux combinés $S_U$, $S_v$ et $S_W$.

Dans un deuxième exemple non limitatif, illustré à la figure 2b, le bloc d'avance de phase 30 comprend trois circuits dits "*mélangeurs*" 32, 32', 32" qui reçoivent chacun en entrée un signal issu d'un capteur (le signal U pour le circuit mélangeur 32) et le signal en avance de phase de 120° par rapport à celui-ci (le signal V pour le circuit mélangeur 32).

Chaque circuit mélangeur procède à une combinaison des signaux qu'il reçoit en entrée (signaux U et V pour le circuit mélangeur 32), avec une pondération qui dépend du signal de commande δ généré par le circuit de commande 20 et représentatif de l'avance de phase souhaitée.

Le signal combiné et généré en sortie de chaque circuit mélangeur 32, 32', 32" (signal respectivement désigné $S_u$, $S_v$ et $S_w$) est appliqué à une première entrée d'un comparateur à hystérésis 34, 34', 34". Sur la seconde entrée d'un comparateur à hystérésis 34, 34', 34" est appliqué un signal combiné $S_v$ différent de celui qui est appliqué sur la première entrée. Ceci permet une comparaison entre signaux Su, et Sv plus robuste face à des perturbations parasites car l'amplitude entre lesdits signaux est plus grande que dans le premier mode de réalisation.

On obtient ainsi en sortie de chacun des comparateurs à hystérésis 34, 34', 34" les signaux U', V, W' destinés au circuit de commande 20 et qui correspondent aux signaux U, V, W avec l'avance de phase souhaitée. L'utilisation des comparateurs à hystérésis permet de s'affranchir du décalage en tension des signaux combinés $S_U$, $S_V$ et $S_W$.

En variante, sur la deuxième entrée, on peut appliquer le signal $(S_u+S_w)/2$. On obtient ainsi en sortie de chacun des comparateurs à hystérésis 34, 34', 34" les signaux U', V, W' destinés au circuit de commande 20 et qui correspondent aux signaux U, V, W avec l'avance de phase souhaitée. L'utilisation des comparateurs à hystérésis permet de s'affranchir du décalage en tension des signaux combinés $S_U$, $S_V$ et $S_W$.

Selon un troisième mode de réalisation non limitatif, illustré à la figure 2c, sur la première entrée d'un comparateur, on envoie un signal combiné, par exemple $S_u$, et sur la seconde entrée, on envoie un signal capteur W différent des deux signaux qui servent à fabriquer le signal combiné. Cela permet d'avoir des décalages de phase de 60° au lieu de 120° pour commander la machine.

Selon un quatrième mode de réalisation non limitatif, illustré à la figure 2d, le bloc d'avance de phase 30 comprend toujours trois circuits dits "*mélangeurs*" 32, 32', 32" qui reçoivent chacun en entrée un signal issu d'un capteur (le signal U pour le circuit mélangeur 32) et le signal en avance de phase de 120° par rapport à celui-ci (le signal V pour le circuit mélangeur 32).

Chaque circuit mélangeur procède à une combinaison des signaux qu'il reçoit en entrée (signaux U et V pour le circuit mélangeur 32), avec une pondération qui dépend du signal de commande δ généré par le circuit de commande 20 et représentatif de l'avance de phase souhaitée.

Les signaux combinés et générés en sortie de chaque circuit mélangeur 32, 32', 32" (signal respectivement désigné $S_u$, $S_v$ et $S_w$) sont utilisés pour générer un nombre supérieur de signaux traités ST, ici sept signaux ST1, ST2 , ST3, ST4, ST5, ST6, ST7. Il existe sept comparateurs à hystérésis. Sur une entrée d'un comparateur, on applique un des signaux traités ST1 par exemple, et sur l'autre entrée, on applique un des signaux combinés $S_u$, $S_v$ ou $S_w$ choisi de sorte que l'amplitude de la différence des deux entrées soit maximale et que les signaux de sortie des comparateurs soient équirépartis sur une période électrique ($2\pi/7$). On peut utiliser un inverseur logique pour s'affranchir des problèmes d'adaptation d'impédance entre les éléments des circuits mélangeurs et les comparateurs.

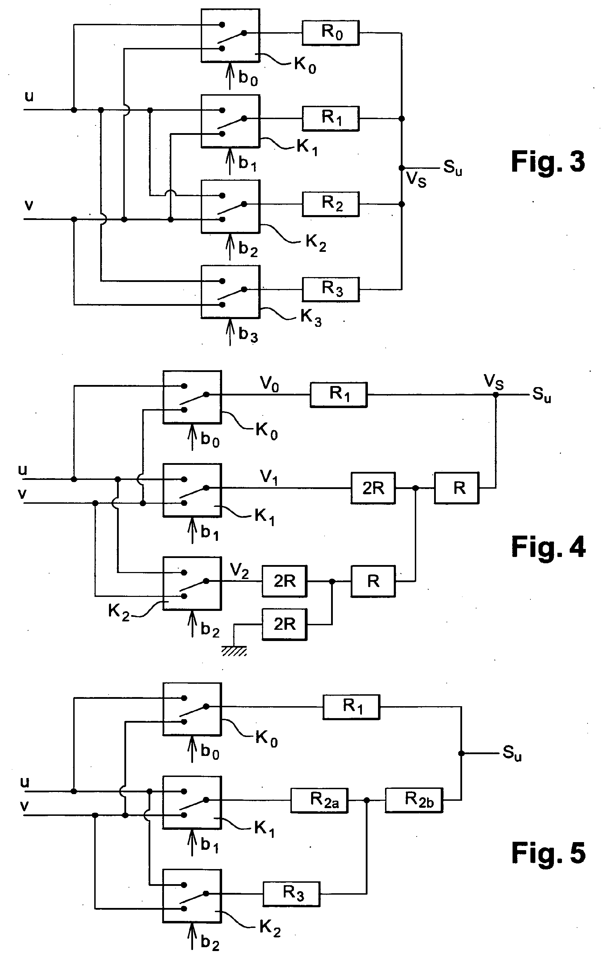

On va à présent décrire en référence à chacune des figures 3 à 8 différents modes possibles pour la réalisation des circuits mélangeurs 32, 32', 32". On présentera à chaque fois l'exemple comme application du circuit mélangeur 32 qui reçoit en entrée les signaux U et V ; naturellement, ces solutions sont également applicables à l'identique aux circuits mélangeurs 32' et 32" qui reçoivent respectivement en entrée les signaux V et W, et W et U.

Dans un premier exemple représenté à la figure 3, le circuit mélangeur 32 comprend un nombre prédéterminé de commutateurs $K_i$ (ici quatre commutateurs $K_0$, $K_1$, $K_2$, $K_3$) qui reçoivent chacun sur une première entrée le signal U et sur une seconde entrée le signal V.

Chaque commutateur $K_i$ est commandé par l'un des bits $b_i$ du mot logique correspondant à la consigne d'avance de phase δ appelée encore commande δ de manière à sélectivement délivrer en sortie soit le signal reçu sur la première entrée (signal U dans le cas décrit ici), soit le signal reçu sur la seconde entrée (signal V dans le cas étudié ici). Donc, dans cet exemple, un commutateur est bi-position.

La sortie de chaque commutateur $K_i$ est par ailleurs reliée à la sortie du circuit mélangeur 32 (qui porte le signal $S_u$) par l'intermédiaire d'une résistance $R_i$ qui permet, comme cela apparaîtra dans la suite, une pondération du signal sélectionné par le commutateur $K_i$ (en fonction de la commande du bit $b_i$) dans le signal de sortie $S_U$.

En effet, en prenant l'exemple où le circuit mélangeur comprend quatre commutateurs $K_i$ et le mot de commande δ comprend par conséquent quatre bits $b_0$ à $b_3$ (comme représenté en figure 3), la tension $V_s$ sur le noeud commun aux quatre résistances $R_0$, $R_1$, $R_2$, $R_3$ (qui forme donc le signal $S_u$) vaut :

$$V_S = \frac{V_3.R_2.R_1.R_0 + V_2.R_3.R_1.R_0 + V_1.R_3.R_2.R_0 + V_0.R_3.R_2.R_1}{R_0.R_1.R_2 + R_0.R_1.R_3 + R_0.R_2.R_3 + R_1.R_2.R_3}$$

où la tension $V_i$ correspond à la tension en sortie du commutateur $K_i$ et vaut donc U ou V selon l'entrée sélectionnée sur ce commutateur par le bit $b_i$.

On voit ainsi aisément qu'en utilisant des résistances différentes deux à deux et du fait de la linéarité des capteurs (i.e. qui délivre un signal capteur linéaire), la combinaison des signaux sélectionnés par les différents commutateurs $K_i$ et pondérés par les différents résistances $R_i$ permet d'obtenir un signal combiné $S_u$ dont l'avance de phase par rapport au signal U peut prendre une pluralité de valeurs (ici seize valeurs = $2^4$) entre 0° et 120° (avance de phase du signal V) selon la valeur du mot de commande δ.

Dans un second exemple représenté à la figure 4, le circuit mélangeur comprend une pluralité de commutateurs $K_i$ (ici trois commutateurs $K_0$, $K_1$, $K_2$) connectés à un réseau de type R-2R.

Précisément, la sortie de chaque commutateur $K_i$ est liée à une borne d'une résistance de résistance 2R. Les bornes opposées de chacune de ces résistances associées à un commutateur $K_i$ sont liées à la borne opposée d'une résistance associée au commutateur $K_{i+1}$ par l'intermédiaire d'une résistance de résistance R. La résistance associée à la sortie du dernier commutateur (ici $K_2$) est par ailleurs liée à la masse par l'intermédiaire d'une résistance de résistance 2R.

Cette solution, qui fonctionne selon les mêmes principes que le premier exemple illustré à la figure 3, permet d'obtenir sur la borne du résistance associé au commutateur $K_0$ opposée à celui-ci un signal $S_u$ dont le décalage de phase par rapport au signal U peut prendre une pluralité de valeurs comprises entre zéro et le décalage du signal V par rapport au signal U (ici 120°).

Grâce à la construction particulière du circuit R-2R utilisé, les valeurs de décalage qu'il est possible d'obtenir par la commande appropriée des différents bits $b_0$, $b_1$, $b_2$ sont en outre régulièrement réparties sur la plage angulaire précitée (ici de 0° à 120°).

La tension $V_s$ qui forme donc le signal $S_u$ vaut :

$$V_s = 1/2\ V_0 + 1/4V_1 + 1/8\ V_2$$

La figure 5 représente un troisième exemple d'un circuit mélangeur 32 qui combine l'utilisation d'une pluralité de valeurs de résistance et une structure de pont résistif série/parallèle, ce qui permet une plus grande liberté dans le choix des valeurs de décalage de phase.

La construction utilisée à la figure 5 donne en effet pour valeur de la tension $V_s$ (qui correspond au signal combiné $S_U$) :

$$V_S = \frac{V_1.\left[R_{2a}.R_3 + R_{2b}.R_{2a} + R_{2b}.R_3\right] + V_2.R_1.R_3 + V_3.R_1.R_{2a}}{R_{2a}.R_3 + R_{2b}.R_{2a} + R_{2b}.R_3 + R_1.R_{2a} + R_1.R_3},$$

où on rappelle que les valeurs $V_1$, $V_2$, $V_3$ valent chacune U ou V respectivement selon la valeur des bits $b_0$, $b_1$, $b_2$ du mot de commande $\delta$.

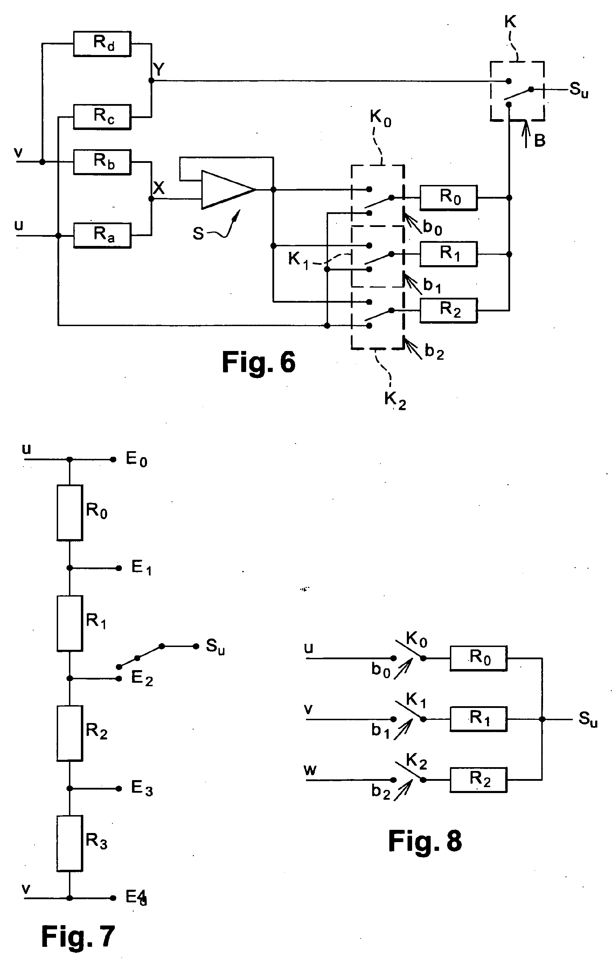

La figure 6 représente un quatrième exemple de circuit mélangeur 32.

Dans cet exemple, les signaux capteurs U et V sont d'une part pondérés respectivement au moyen d'un résistance de résistance $R_a$ et d'un résistance de résistance $R_b$ puis combinés en un signal X, les valeurs des résistances $R_a$ et $R_b$ étant choisies de manière à ce que la phase du signal X soit en avance de 60° par rapport au signal U (étant rappelé que le signal V est avance de 120° par rapport au signal U).

D'autre part, les signaux U et V sont, selon le même principe, pondérés respectivement par des résistances de résistance $R_c$ et $R_d$, puis combinés en un signal Y dont l'avance de phase vaut 90° par rapport au signal U.

On applique à travers un circuit suiveur S le signal X aux secondes entrées de commutateurs $K_0$, $k_1$, $K_2$ d'un circuit du type de celui présenté précédemment à la figure 3, les premières entrées de ces mêmes commutateurs $K_0$, $K_1$, $K_2$ recevant le signal U.

Chacun des commutateurs $K_0$, $K_1$, $K_2$ génère en sortie l'un des deux signaux qu'il reçoit en entrée (ici le signal U ou le signal X) en fonction du bit de commande (respectivement $b_0$, $b_1$, $b_2$ pour les commutateurs $K_0$, $K_1$, $K_2$) du mot de commande $\delta$ représentatif du décalage souhaité. Ces commutateurs sont donc bi-position.

Les signaux issus de chacun des commutateurs $K_0$, $K_1$, $K_2$ sont pondérés au moyen d'un résistance (respectivement de résistance $R_0$, $R_1$, $R_2$) puis combinés : on obtient ainsi après combinaison un signal dont le décalage de phase peut prendre une pluralité de valeurs en fonction des bits de commande $b_0$, $b_1$, $b_2$, comprises par rapport à la phase du signal U entre 0° et 60° (déphasage du signal X par rapport au signal U).

Le signal ainsi combiné est appliqué à une entrée d'un commutateur K qui reçoit sur une autre entrée le signal Y précédemment mentionné (dont le déphasage vaut 90° par rapport au signal U). Le commutateur K est commandé par un bit de commande B qui permet ainsi de choisir d'émettre en sortie du commutateur K un signal $S_u$ qui correspond soit au signal déphasé Y de 90°, soit au signal dont le déphasage est déterminé par les bits de commande $b_0$, $b_1$, $b_2$ et compris entre 0° et 60°.

Le circuit mélangeur qui vient d'être présenté permet ainsi d'obtenir en sortie un signal $S_u$ dont l'avance de phase par rapport au signal U peut prendre une pluralité de valeurs entre 0° et 90°, parmi lesquelles plusieurs valeurs réparties entre 0° et 60° (ce qui est utile pour le contrôle du couple aux faibles vitesses de rotation) et une seule valeur à 90° (utile principalement pour maximiser le couple à haute vitesse). Les valeurs de décalage de phase qu'il est possible d'obtenir sont ainsi réparties selon les besoins, en particulier dans les zones de la plage angulaire où la variation du décalage a des conséquences importantes sur le couple de la machine. On a ainsi une plus grande liberté dans la répartition des valeurs de décalage de phase qu'il est possible d'obtenir grâce au circuit mélangeur.

Dans un cinquième exemple, illustré à la figure 7, les signaux capteurs U et V sont reliés l'un à l'autre par plusieurs résistances connectées en série, ici quatre résistance R1, R2, R3 et R4. Entre deux résistances voisines, se trouve un noeud Ei (i=0 à 4) connecté à l'entré d'un commutateur multi-positions, ici cinq positions. En fonction du mot logique de commande $\delta$, le commutateur multi-positions vient connecté l'une de ses entrées Ei à la sortie du circuit mélangeur $S_u$.

Dans les exemples que l'on vient de voir, les commutateurs sont bi-position à savoir qu'ils comportent aux moins deux états passants permettant de transmettre sélectivement un signal parmi plusieurs.

Dans l'exemple suivant, les commutateurs sont des interrupteurs simples à savoir qu'ils comportent un état passant permettant de transmettre un signal et un état ouvert permettant de stopper une transmission de signal.

Dans un sixième exemple, illustré à la figure 8, le circuit mélangeur comporte trois interrupteurs simples $K_0$,

$K_1$, $K_2$. La sortie de chaque interrupteur Ki est connectée à la borne d'une résistance Ri. La borne de sortie de chaque résistance Ri est reliée en un noeud constituant la sortie du mélangeur. Suivant la valeur du mot logique de commande de l'avance de phase δ, un interrupteur $K_0$ ($K_1$, $K_2$) transmet le signal capteur U (V, W) à la borne d'entrée de la résistance ou aucun signal. Le signal de sortie $S_u$ est la résultante de toutes les tensions en entrée des résistances, lesquelles tensions dépendent du mot logique de commande.

Les modes de réalisation qui viennent d'être décrits ne constituent que des exemples possibles de mise en oeuvre de l'invention.

**Revendications**

1. Dispositif de pilotage d'une machine électrique tournante polyphasée, ladite machine comprenant un stator, un rotor, et des capteurs, ledit dispositif étant apte à recevoir :

    - au moins un premier signal capteur (U; V; W) représentatif d'une position du rotor par rapport au stator et délivré par un premier capteur, et
    - un second signal capteur (V; W; U) représentatif de ladite position et déphasé par rapport au premier signal et délivré par un second capteur, **caractérisé en ce qu'**il comporte :
    - des moyens (K, R) pour combiner le premier et le second signal capteur en un signal combiné ($S_u$; $S_v$; $S_w$), lesdits moyens comprenant au moins un élément de commutation ($K_0$, $K_1$, $K_2$, $K_3$) piloté apte à prendre au moins deux états, le signal combiné ($S_u$; $S_v$; $S_w$) étant fonction d'un état du premier élément et permettant de piloter ladite machine.

2. Dispositif de pilotage selon la revendication 1, **caractérisé en ce que** le premier élément de commutation comporte un état passant permettant de transmettre un signal et un état ouvert permettant de stopper une transmission de signal.

3. Dispositif de pilotage selon la revendication 1, **caractérisé en ce que** le premier élément de commutation comporte aux moins deux états passants permettant de transmettre sélectivement un signal parmi plusieurs.

4. Dispositif de pilotage selon l'une des revendications précédentes, **caractérisé en ce qu'**il est apte à recevoir en entrée un nombre de signaux capteurs égal au nombre de phases de la machine.

5. Dispositif de pilotage selon l'une des revendications 1 à 3, **caractérisé en ce qu'**il est apte à recevoir en entrée un nombre de signaux capteurs différent du nombre de phases de la machine.

6. Dispositif de pilotage selon l'une des revendications précédentes, **caractérisé en ce que** lesdits moyens de combinaison comprennent en outre des moyens de pondération ($R_0$, $R_1$, $R_2$, $R_3$ ; 2R; $R_1$, $R_{2a}$, $R_3$) des signaux capteurs.

7. Dispositif de pilotage selon la revendication précédente, **caractérisé en ce que** les moyens de pondération comprennent au moins une résistance.

8. Dispositif de pilotage selon l'une des revendications précédentes, **caractérisé en ce que** les moyens de combinaison comprennent une pluralité d'éléments de commutation ($K_0$, $K_1$, $K_2$, $K_3$).

9. Dispositif de pilotage selon l'une des revendications précédentes, **caractérisé en ce qu'**il coopère avec un circuit de commande (20) comportant un étage d'entrée (21) apte à recevoir les signaux capteurs.

10. Dispositif de pilotage selon l'une des revendications précédentes, **caractérisé en ce qu'**il coopère avec un circuit de commande (20) comportant un microprocesseur apte à piloter au moins un élément de commutation ($K_0$, $K_1$, $K_2$, $K_3$).

11. Dispositif de pilotage selon la revendication précédente, **caractérisé en ce que** le microprocesseur est apte à piloter l'élément de commutation en fonction d'une information représentative de la vitesse de rotation de la machine.

12. Machine électrique tournante polyphasée, **caractérisée en ce qu'**elle comprend un dispositif de pilotage (30) selon l'une des revendications précédentes.

**13.** Alternateur-démarreur, **caractérisé en ce qu'**il comprend un dispositif de pilotage (30) selon l'une des revendications précédentes.

**Claims**

**1.** Device for controlling a polyphase rotating electrical machine, said machine comprising a stator, a rotor, and sensors, said device being able to receive:

- at least one first sensor signal (U; V; W) representative of a position of the rotor in relation to the stator and delivered by a first sensor, and
- a second sensor signal (V; W; U) representative of said position and phase-shifted in relation to the first signal and delivered by a second sensor, **characterized in that** it comprises:
- means (K, R) for combining the first and the second sensor signals into a combined signal ($S_u$; $S_v$; $S_w$), said means comprising at least one controlled switching element ($K_0$, $K_1$, $K_2$, $K_3$) capable of assuming at least two states, the combined signal ($S_u$; $S_v$; $S_w$) being dependent on a state of the first element and being used to control said machine.

**2.** Control device according to Claim 1, **characterized in that** the first switching element has an ON state allowing a signal to be transmitted and an OFF state allowing a signal transmission to be stopped.

**3.** Control device according to Claim 1, **characterized in that** the first switching element has at least two ON states allowing one of several signals to be transmitted selectively.

**4.** Control device according to one of the preceding claims, **characterized in that** it is capable of receiving as input a number of sensor signals equal to the number of phases of the machine.

**5.** Control device according to one of Claims 1 to 3, **characterized in that** it is capable of receiving as input a number of sensor signals different from the number of phases of the machine.

**6.** Control device according to one of the preceding claims, **characterized in that** said combining means also comprise weighing means ($R_0$, $R_1$, $R_2$, $R_3$; 2R; $R_1$, $R_{2a}$, $R_3$) for weighing the sensor signals.

**7.** Control device according to the preceding claim, **characterized in that** the weighing means comprise at least one resistor.

**8.** Control device according to one of the preceding claims, **characterized in that** the combining means comprise a plurality of switching elements ($K_0$, $K_1$, $K_2$, $K_3$).

**9.** Control device according to one of the preceding claims, **characterized in that** it cooperates with a control circuit (20) comprising an input stage (21) capable of receiving the sensor signals.

**10.** Control device according to one of the preceding claims, **characterized in that** it cooperates with a control circuit (20) comprising a microprocessor capable of controlling at least one switching element ($K_0$, $K_1$, $K_2$, $K_3$).

**11.** Control device according to the preceding claim, **characterized in that** the microprocessor is capable of controlling the switching element according to information representative of the speed of rotation of the machine.

**12.** Polyphase rotating electrical machine, **characterized in that** it comprises a control device (30) according to one of the preceding claims.

**13.** Alternator-starter, **characterized in that** it comprises a control device (30) according to one of the preceding claims.

**Patentansprüche**

**1.** Vorrichtung zur Steuerung einer mehrphasigen drehenden elektrischen Maschine, wobei die Maschine einen Stator, einen Rotor und Sensoren enthält, wobei die Vorrichtung empfangen kann:

- mindestens ein erstes Sensorsignal (U; V; W), das für eine Stellung des Rotors bezüglich des Stators repräsentativ ist und von einem ersten Sensor geliefert wird, und

- ein zweites Sensorsignal (V; W; U), das für die Stellung repräsentativ und bezüglich des ersten Signals phasenverschoben ist und von einem zweiten Sensor geliefert wird,

**dadurch gekennzeichnet, dass** sie aufweist:

- Einrichtungen (K, R), um das erste und das zweite Sensorsignal in ein kombiniertes Signal ($S_u$; $S_v$; $S_w$) zu kombinieren, wobei die Einrichtungen mindestens ein gesteuertes Schaltelement ($K_0$, $K_1$, $K_2$, $K_3$) enthalten, das mindestens zwei Zustände annehmen kann, wobei das kombinierte Signal ($S_u$; $S_v$; $S_w$) von einem Zustand des ersten Elements abhängt und es erlaubt, die Maschine zu steuern.

2. Steuereinrichtung nach Anspruch 1, **dadurch gekennzeichnet, dass** das erste Schaltelement einen leitenden Zustand, der es ermöglicht, ein Signal zu übertragen, und einen offenen Zustand aufweist, der es ermöglicht, eine Signalübertragung zu stoppen.

3. Steuereinrichtung nach Anspruch 1, **dadurch gekennzeichnet, dass** das erste Schaltelement mindestens zwei leitende Zustände aufweist, die es ermöglichen, ein Signal von mehreren selektiv zu übertragen.

4. Steuereinrichtung nach einem der vorhergehenden Ansprüche, **dadurch gekennzeichnet, dass** sie am Eingang eine Anzahl von Sensorsignalen gleich der Anzahl von Phasen der Maschine empfangen kann.

5. Steuereinrichtung nach einem der Ansprüche 1 bis 3, **dadurch gekennzeichnet, dass** sie am Eingang eine Anzahl von Sensorsignalen empfangen kann, die sich von der Anzahl von Phasen der Maschine unterscheidet.

6. Steuereinrichtung nach einem der vorhergehenden Ansprüche, **dadurch gekennzeichnet, dass** die Kombinationseinrichtungen außerdem Gewichtungseinrichtungen ($R_0$, $R_1$, $R_2$, $R_3$; 2R; $R_1$, $R_{2a}$, $R_3$) der Sensorsignale enthalten.

7. Steuereinrichtung nach dem vorhergehenden Anspruch, **dadurch gekennzeichnet, dass** die Gewichtungseinrichtungen mindestens einen Widerstand enthalten.

8. Steuereinrichtung nach einem der vorhergehenden Ansprüche, **dadurch gekennzeichnet, dass** die Kombinationseinrichtungen eine Vielzahl von Schaltelementen ($K_0$, $K_1$, $K_2$, $K_3$) enthalten.

9. Steuereinrichtung nach einem der vorhergehenden Ansprüche, **dadurch gekennzeichnet, dass** sie mit einer Steuerschaltung (20) zusammenwirkt, die eine Eingangsstufe (21) aufweist, die die Sensorsignale empfangen kann.

10. Steuereinrichtung nach einem der vorhergehenden Ansprüche, **dadurch gekennzeichnet, dass** sie mit einer Steuerschaltung (20) zusammenwirkt, die einen Mikroprozessor aufweist, der mindestens ein Schaltelement ($K_0$, $K_1$, $K_2$, $K_3$) steuern kann.

11. Steuereinrichtung nach dem vorhergehenden Anspruch, **dadurch gekennzeichnet, dass** der Mikroprozessor das Schaltelement abhängig von einer Information steuern kann, die für die Rotationsgeschwindigkeit der Maschine repräsentativ ist.

12. Mehrphasige drehende elektrische Maschine, **dadurch gekennzeichnet, dass** sie eine Steuereinrichtung (30) nach einem der vorhergehenden Ansprüche enthält.

13. Starter-Generator, **dadurch gekennzeichnet, dass** er eine Steuervorrichtung (30) nach einem der vorhergehenden Ansprüche enthält.

Fig. 1

Fig. 2a

Fig. 2b

Fig. 2c

Fig. 2d

**Fig. 3**

**Fig. 4**

**Fig. 5**

**Fig. 6**

**Fig. 7**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004100351 A

- US 4271385 A